# EUROPÄISCHE PATENTANMELDUNG

(11) **EP 2 028 436 A1**
(43) Veröffentlichungstag der Anmeldung: **25.02.2009**
(21) Anmeldenummer: 08162757.2
(22) Anmeldetag: 21.08.2008
(51) Int. Cl.: G01B 3/10

(54) **Rollbandmaß und Führungsmittel mit Messband-Arretierung**

(30) Priorität: 22.08.2007 DE 202007011752 U
(71) Anmelder: Bayerische Mass-Industrie Arno Keller GmbH, 91217 Hersbruck (DE)
(72) Erfinder: Keller, Hans, 91217 Hersbruck (DE); Dengler, Herbert, 91217 Hersbruck (DE); Hubert, Ralf, 90765 Fürth (DE)
(74) Vertreter: Götz, Georg Alois

(57) **Zusammenfassung**

Rollbandmaß, mit einem oder mehreren Führungsmitteln, insbesondere Führungsrahmen, die einen Enddurchgang aufweisen, innerhalb welchem ein Messband ein- und ausrollbar ist, und mit wenigstens einem mit Reibschluss arbeitenden Messband-Arretiermittel, mit dem das Messband in reibschlüssigen Kontakt bringbar ist, wobei das Arretiermittel als Schnur, Band- oder sonstiges Formteil ausgebildet und an den Führungsmitteln unverstellbar fixiert ist.

## Beschreibung

Die Erfindung betrifft ein Rollbandmaß mit einem oder mehreren Führungsmitteln, insbesondere Führungsrahmen, die einen Enddurchgang aufweisen, innerhalb welchem ein Messband ein- und ausrollbar ist. Auch ist bei dem Rollbandmaß wenigstens ein Arretiermittel vorgesehen, mit dem das Messband in reibschlüssigem Kontakt bringbar ist, um letzteres in einer bestimmten Stellung zu arretieren bzw. zu halten. Ferner betrifft die Erfindung für das Rollbandmass geeignete Führungsmittel oder -rahmen.

Rollbandmaße sind aus dem Stand der Technik bekannt, z. B. aus DE 73 26 906 U oder DE 33 26 137 A1.

In DE 73 26 906 U ist unter dem Titel "Messgerät" ein Rollbandmaß beschrieben, bei dem über einen Drehhebel eine Messband-Wickelspule ein- und ausrollbar ist. Die Wickelspule ist auf einem Träger angebracht, der als Rahmen mit zwei lösbar miteinander verbundenen Schalenteilen gebildet ist. Der Drehhebel zum Auf- und Abspulen des Messbandes besitzt einen Griff, der in der Nichtgebrauchslage so an den Rand des Rahmens angelegt werden kann, dass der Drehhebel als Sperre für die Messband-Wickelspule dient.

DE 33 26 137 A1 beschreibt ein Rollbandmaß mit einem Bandmaßgehäuse etwa der anfangs genannten Art, woraus ein Messband ausziehbar ist. An der Seitenwand des Gehäuses befindet sich ein drehbares Stellelement, mittels welchem eine Bremse zum Arretieren des ausgezogenen Messbandes betätigt werden kann. Je nach Ein- bzw. Ausschalten der Bremse ist das Stellelement in eine erste und eine zweite Position zu verstellen, was eine bewegliche bzw. drehbare Lagerung des Stellelements im Bandmaßgehäuse erfordert.

Dem gegenüber liegt der Erfindung die Aufgabe zugrunde, ein Rollbandmaß sowie Führungsmittel oder -rahmen für das Messband jeweils mit einem deutlich verringerten Aufwand an Material und Bauteilen zu schaffen. Zur Lösung wird auf das im Anspruch 1 angegebene Rollbandmaß sowie die im Anspruch 11 angegebenen Führungsmittel beziehungsweise Führungsrahmen für dieses Rollbandmaß verwiesen. Optionale, vorteilhafte Ausgestaltungen der Erfindung ergeben sich aus den abhängigen Unteransprüchen.

Das Rollbandmaß ist erfindungsgemäß mit einem oder mehreren Arretiermitteln für das (beispielsweise teilweise ausgezogene) Messband ausgestattet. Diese/s Arretiermittel sind/ist (zur Vereinfachung wird im weiteren Verlauf lediglich der Singular verwendet) erfindungsgemäß äußerst einfach aufgebaut und zur Reibschlussverbindung mit dem Messband ausgebildet. Um der Forderung nach einer einfachen Bedienbarkeit zu genügen, ist das Arretiermittel zur Bedienung mit einer Hand geeignet, wobei die Bedienung gleichzeitig mit der Handhabung bzw. dem Halten des Rollbandmaßkörpers erfolgen kann.

Die Erfindung ermöglicht es in einer bevorzugten Ausführungsform, das Arretiermittel fest und unverstellbar an dem oder den Führungsmitteln oder -rahmen des Rollbandmasses anzubringen. Erfindungsgemäß ist es dabei möglich, als Arretiermittel ein Strangformteil mit einer länglichen und geometrisch äußerst einfachen Struktur beispielsweise nach Art einer Schnur oder eines Bandes zu nutzen, was den Einsatz von reibschlussfähigem Material, insbesondere Gummi oder einem thermoplastischen Elastomer, ermöglicht. Durch die unverstellbare Anbringung des Arretier-strangformteil an dem oder den Führungsmitteln oder -rahmen ist eine sichere und zuverlässige Arretierung des Messbandes bei gleichzeitig einfachster Bedienung gewährleistet.

In einer alternativen Ausführungsform der Erfindung ist das Arretiermittel integriert mit dem oder den Führungsmitteln oder -rahmen ausgeführt. Dafür kann beispielsweise ein Zweikomponenten-Spritzgussverfahren genutzt werden, es wird also in einem einzigen Arbeitsgang ein Führungsmittel/Führungsrahmen mit daran integriertem Arretiermittel im Spritzguss hergestellt, wobei für Führungsmittel/Führungsrahmen und Arretiermittel unterschiedliche Materialien zum Einsatz kommen, beispielsweise Polyamid für die Führungsmittel und ein thermoplastischer Elastomer für das Arretiermittel.

Die Wirksamkeit der Messband-Arretierung lässt sich besonders dadurch optimieren, dass gemäß einer Ausbildung der Erfindung das Arretiermittel mit dem Enddurchgang in Wirkungsverbindung gesetzt ist. Dies kann beispielsweise dadurch erfolgen, dass das Arretiermittel zur Begrenzung des Enddurchgangs bei den Rollbandmaß-Führungsmitteln angeordnet wird. Dies kann beispielsweise bei Verwendung eines getrennt hergestellten Arretiermittels durch eine Ausführung des Arretiermittels als Arretierring, der im Bereich des Enddurchgangs um die Führungsmittel geführt ist, realisiert werden. Bei Verwendung eines integrierten Arretiermittels ergibt sich die Möglichkeit, mittels Spritzguss einen Steg aus thermoplastischem Elastomer im Bereich des Enddurchgangs an den Führungsmitteln zu erzeugen. Dabei kann dieser Steg entweder nur im Öffnungsbereich des Führungsmittels/Führungsrahmens ausgeführt sein, oder analog zum Arretierring um die Aussenseite herum fortgesetzt werden, so dass praktisch ein in die Führungsmittel integriertern Arretierring entsteht. Dadurch ist gewährleistet, dass das Arretier-Strangformteil das Messband reibschlüssig kontaktieren und damit in seiner Ausfahrstellung festlegen kann.

In einer weiteren Ausführungsform der Erfindung ist es möglich, das Arretiermittel mit einem weiteren verlängerten, auskragenden Steg zu versehen, der an dem ersten Steg ansetzt und sich dort von dem Enddurchgang weg in einem Abstand von den Führungsmitteln/Führungsrahmen derart erstreckt, dass das Messband zwischen den Führungsmitteln/Führungsrahmen und dem zweiten, verlängerten Steg erstreckt. Der Reibschlussbereich des Arretiermittels kann dabei die gesamte Unterseite des ersten und des zweiten Steges oder nur Teile davon umfassen. Insbesondere ist es möglich, nur im von den ersten Steg abgewandten Endbereich des zweiten Steges einen Reibschlussbereich vorzusehen, sei es als separates Strangformteil oder als integrierter Reibschlussbereich im Zweikomponenten-Spritzgussverfahren analog zu den oben genannten Ausführungsformen.

In der Fachwelt ist es allgemein bekannt, das Messband zur Längsstabilisierung seines aus dem Rollbandmaß ausgefahrenen Abschnitts mit einer Querwölbung bzw. entsprechenden Bombage zu versehen. In diesem Zusammenhang besteht eine optionale, vorteilhafte Erfindungsausbildung darin, das Messband derart zu bombieren oder sonst wie zu strukturieren, dass es beim Ausrollen eine Wölbung quer zu seiner Längsrichtung und eine entsprechend konvex ausgebauchte Längsseite bildet, die einem noch aufgerollten Abschnitt des Messbandes zugewandt bzw. gegen den aufgerollten Messband-Abschnitt gerichtet ist. Der damit über die Längsstabilisierung hinaus noch zusätzlich erzielte Vorteil besteht darin, dass beim Einrollen des Messbandes, wobei die Querwölbung flachgedrückt wird, eine Querbiegespannung erzeugt wird. Über diese lässt sich nach anfänglicher, manueller Initialisierung ein weitgehend selbsttätiges Ausfahren des Messbandes aus den Führungsmitteln bzw. Führungsrahmen erzielen. Metallbänder, mit denen sich derartige Messbänder realisieren lassen, sind bereits auf dem Markt erhältlich und genauer in DE 20 2006 004 427 U1 beschrieben.

Nach dieser letztgenannten Fundstelle sind auch Metallbänder bekannt, denen bei ihrer Herstellung auf entsprechenden, mit Ziehrollenpaaren bestückten Ziehbänken eine in Längserstreckung wirkende Einrollspannung vermittelt wird. Dieser Effekt lässt sich beispielsweise auch beim Langziehen von Dekorbändern aus Papier, Kunststoff, textilem Geweben oder dergleichen beobachten. Mit Vorteil lässt sich auch beim erfindungsgemäßen Rollbandmaß das Messband in entsprechender Weise mit einer in dessen Längsrichtung wirkenden Einrollspannung versehen, was den Vorteil eines erleichterten und beschleunigten manuellen Einrollens des Messbands in die Führungsmittel bzw. den Führungsrahmen hinein ergibt. Zudem bleibt der aufgerollte Messbandwickel dadurch stabiler in seiner Aufwickel-Form.

Gemäß einer weiteren optionalen Erfindungsausbildung werden die zuvor genannten, beiden Effekte bzw. Merkmale - Querwölbung mit zum Messband-Wickel konvex ausgebauchter Längsseite sowie Einprägen einer Einrollspannung - beim erfindungsgemäßen Rollbandmaß kombiniert eingesetzt, und zwar dahingehend, dass die von der Querwölbung verursachte Querbiegespannung größer ausgelegt ist, als die Einrollspannung. Damit wird ein selbsttätiges Ausrollen des Messbandes aus den Führungsmitteln oder Führungsrahmen heraus in die Messposition ermöglicht.

Im Zusammenhang mit der selbsttätigen Linearerstreckung bzw. dem selbsttätigen Ausrollen aus den Führungsmitteln oder dem Führungsrahmen des Rollbandmaßes besteht eine weitere, vorteilhafte Erfindungsausbildung darin, dass der gegenüber dem ausgerollten Linearabschnitt des Messbandes innerhalb der Führungsmittel oder dem Führungsrahmen verbliebene Messband-Wickel mit einem translatorischen Verstellspiel untergebracht, aufgenommen und/oder gelagert ist. Das translatorische Verstellspiel lässt sich vorteilhaft zum Bremsen, Feststellen bzw. Arretieren des Messbandes einsetzen: Je nach Verstellung oder Verschiebung des Wickels innerhalb der Führungsmittel oder innerhalb des Führungsrahmens lässt sich das Messband in oder außer Kontakt mit dem Arretier-Strangformteil bringen. Bei Kontakt mit dem Arretier-Strangformteil wird die Festlegung aufgrund des erfolgten Reibschlusses erzielt.

Das selbsttätige Ausrollen des Messbandes lässt sich vorteilhaft mit einer weiteren Ausführungsform der Erfindung kombinieren, indem das Arretiermittel über eine Achse verstellbar an den Führungsmitteln gelagert wird, wobei der Reibschlussbereich des Arretiermittels so gegen die AusrollRichtung des Messbandes gerichtet ist, dass im unverstellten Zustand das Arretiermittel gegen das Messband ansteht und derart arretiert. Erst durch einen Eingriff des Benutzers wird die Arretierung aufgehoben und dass Messband beginnt den Ausrollvorgang, bis durch Loslassen des Arretiermittels der Reibschlussbereich wieder in Eingriff mit dem Messband kommt und die weitere Ausrollbewegung des Messbandes durch das Arretiermittel gebremst wird. Vorteilhaft lässt sich ein derartiges Arretiermittel in Form einer Wippe realisieren, wobei diese Wippe einen Reibschlussbereich und einen Betätigungsbereich aufweist, die gegenüberliegend bezüglich der Drehachse angeordnet sind. Der Reibschlussbereich kann wiederum entweder über ein separates Arretierbauteil, insbesondere ein Arretier-Strangformteil, oder integriert im Zweikomponenten-Spritzgussverfahren gebildet werde.

Unter die allgemeine, erfinderische Idee fallen Führungsmittel oder ein Führungsrahmen, welche sich durch eine Ausbildung auszeichnen, welche einen länglichen und gekrümmt verlaufenden Schalen- oder Rahmenformteil umfasst. Zweckmäßig ist der Krümmungsradius an den Messband-Wickel angepasst, der im Schalen- oder Rahmenformteil aufrollbar ist. Insbesondere ist eine Schalen- oder Rahmenöffnung nach radial innen (beispielsweise in Richtung der Wickelachse) gerichtet. Gegenüberliegende Seitenwandungen, welche bezüglich der Wickelachse gleichsam Stirnseiten der Führungsmittel bzw. des Führungsrahmens bilden können, begrenzen beidseits einen Durchgang für das Messband. Der erzielte Vorteil besteht darin, dass bereits allein aufgrund der Aufwickel- beziehungsweise Aufrollspannung des Messbandes letzteres gegen einen Schalen- bzw. Rahmenboden gedrückt und so zwischen den Seitenwandungen stabil gehaltert ist. Demnach lassen sich mit einem einzigen einstückig insbesondere aus Kunststoff gespritzten Schalen- oder Rahmenformteil die Führungsmittel oder der Führungsrahmen realisieren.

Zur Erhöhung der Stabilität der Führung und Halterung des Messband-Wickels in den Führungsmitteln oder im Führungsrahmen lässt sich optional ein Führungssteg vorsehen, der die Schalen- oder Rahmenöffnung quer zur Längsrichtung überdeckt und so dazu beiträgt, den Messbandwickel gegen den Schalen- oder Rahmenboden zu halten. Es ist hierbei möglich, den Führungssteg zu einer vollständigen Überbrückung der Schalen- oder Rahmenöffnung im Stegbereich auszubilden, es ist aber ebenso möglich, gegenüberliegende, auskragende Führungsstegteile vorzusehen, zwischen denen eine Öffnung verbleibt. Beide Ausführungsformen werden im Folgenden als "Führungssteg" bezeichnet. Der Führungssteg lässt sich leicht einstückig mit dem Schalen- oder Rahmenformteil beispielsweise im Wege des Kunststoff-Spritzgusses ausbilden. Unter produktionstechnischen Gesichtspunkten ist es vorteilhaft, wenn in der Bodenwandung des Schalen- oder Rahmenformteils dem Führungssteg möglichst direkt gegenüber liegend eine Ausnehmung ausgebildet ist. Dadurch lässt sich die Herstellbarkeit des Führungsstegs beispielsweise über Kunststoff-Spritzgießen erleichtern. Darüber hinaus könnte die Ausnehmung oder der Durchbruch durch die Bodenwandung auch als (weiterer) Austrittsausgang für das Messband dienen.

Die für das erfindungsgemäße Rollbandmaß kennzeichnenden Arretier-Strangmittel lassen sich zum Überdecken der Schalen-oder Rahmenöffnung insbesondere im Endbereich des Schalen- oder Rahmenformteils, dort zur Bildung eines Enddurchganges anbringen. Als besonders geeignetes Strangformteil lässt sich ein O-Ring vorzugsweise aus Gummi über das Schalen- oder Rahmenformteil ziehen. Aber auch andere Formen oder Ausführungsbeispiele für das Arretier-Strangformteil, wie z. B. offene Schnurabschnitte oder flache Bänder sind einsetzbar.

Da das Arretier-Strangformteil zum reibschlüssigen Kontakt und zum Halten bzw. zur Bewegungsverhinderung beim Messband dienen soll, ist nach einer zweckmäßigen Erfindungsausbildung vorgesehen, entsprechend angepasste Anschlag- und/oder Haltemittel im Endbereich des Schalen- oder Rahmenformteils anzubringen. Diese können beispielsweise Nutform und/oder Abstufungen im Bereich der Endkanten oder -ecken der gegenüberliegenden Seitenwände aufweisen. Alternativ oder zusätzlich können die Anschlag-und/oder Haltemittel für das Arretier-Strangformteil mit Haltevorsprüngen oder - schultern am freien Ende der Schalen- bzw. Rahmen-Seiten- und Bodenwände realisiert sein, um das Strangformteil zu hintergreifen und gegen Verschiebung zu sichern.

Um ein versehentliches Entfernen des Messbandes aus den Führungsmitteln/Führungsrahmen zu vermeiden, ist bei einer vorteilhaften Ausführungsform der Erfindung das Messband über die maximale Maßlänge hinaus verlängert, und das im Messbandwickel innenliegende Messbandende ist untrennbar mit einem davorliegenden Bereich verbunden, so dass sich eine Schlaufe als Messbandabschluss ergibt. In Verbindung mit dem Führungssteg ergibt sich so eine Sicherung, die zum Einen verhindert, dass Messband und Führungsmittel/Führungsrahmen voneinander getrennt werden und zum Anderen sicherstellt, dass das Messband immer mit einem richtigen Wickelradius aufgewickelt wird. Die Verbindung zwischen Messbandende und Messbandbereich kann dabei über eine Vielzahl von Verbindungstechniken erfolgen, wie beispielsweise Nieten, Kleben, Heften, Schweißen usw.

Ersichtlich wird mit der erfinderischen Idee der Vorteil erzielt, mit den jeweils einfache Grundform aufweisenden, wenigen Bauteilen "Führungsrahmen", "Arretier-Bauteil" und "Messband" in einfacher Kombination ein leicht handhabbares Rollbandmaß schaffen zu können. Durch die Verringerung und/oder Vereinfachung der (Anzahl der) Bauteile lässt sich eine erhöhte Zuverlässigkeit und Lebensdauer beim praktischen Gebrauch erzielen.

Weitere Einzelheiten, Merkmale, Merkmalskombinationen, Vorteile und Wirkungen auf der Basis der Erfindung ergeben sich aus der nachfolgenden Beschreibung eines bevorzugten Ausführungsbeispiels der Erfindung sowie aus den Zeichnungen. Diese zeigen in:
Figur 1 in perspektivischer Darstellung einen erfindungsgemäßen Führungsrahmen mit schalenartigem Rahmenformteil als Bestandteil eines erfidungsgemäßen Rollbandmaßes,
Figur 2 in perspektivischer Darstellung den Führungsrahmen nach Figur 1, versehen mit einem Arretier-O-Ring,
Figur 3 eine Stirnansicht auf den Führungsrahmen gemäß Figuren 1 und 2, vervollständigt zum erfindungsgemäßen Rollbandmaß mit eingerolltem Messband bzw. aufgenommenem Messband-Wickel,
Figur 4 in perspektivischer Darstellung das Rollbandmaß mit teilweise ausgerolltem bzw. ausgezogenem Messband,
Figur 5 in einer Stirnansicht das Rollbandmaß in manuell gehaltener Arretierstellung und;
Figur 6 in einer Darstellung in Längsansicht das auf eine Unterlage abgesetzte Rollbandmaß mit teilweise ausgerolltem Messband.
Figur 7 in perspektivischer Darstellung einen erfindungsgemäßen Führungsrahmen mit einem integrierten Arretiermittel in Zweikomponenten-Spritzgusstechnik, wobei das Arretiermittel den Enddurchgang vollständig umgibt.
Figur 8 in perspektivischer Darstellung einen erfindungsgemäßen Führungsrahmen mit einem integrierten Arretiermittel in Zweikomponenten-Spritzgusstechnik, wobei das Arretiermittel nur einen oberen Stegbereich im Enddurchgang bildet.
Figur 9 in perspektivischer Darstellung den Endbereich eines weiteren erfindungsgemäßen Führungsrahmens einem Arretiermittel, das zum Klemmen des Messbandes ausgebildet ist.
Figur 10 in perspektivischer Darstellung einen weiteren erfindungsgemäßen Führungsrahmen mit einem Arretiermittel mit verlängertem auskragendem, vom Enddurchgang wegzeigendem Steg.
Figur 11 Ein Arretiermittel für einen erfindungsgemäßen Führungsrahmen mit einer unteren Stopper-Lippe.
Figur 12 in perspektivischer Darstellung einen weiteren erfindungsgemäßen Führungsrahmen mit einem Arretiermittel in Wippenform.
Figur 13 den Führungsrahmen aus Figur 12 in einer seitlichen Schnittdarstellung.
Figur 14 ein Zuatzteil für einen erfindungsgemäßen Führungsrahmen, das als Bandführung und/oder Versteifung dient.

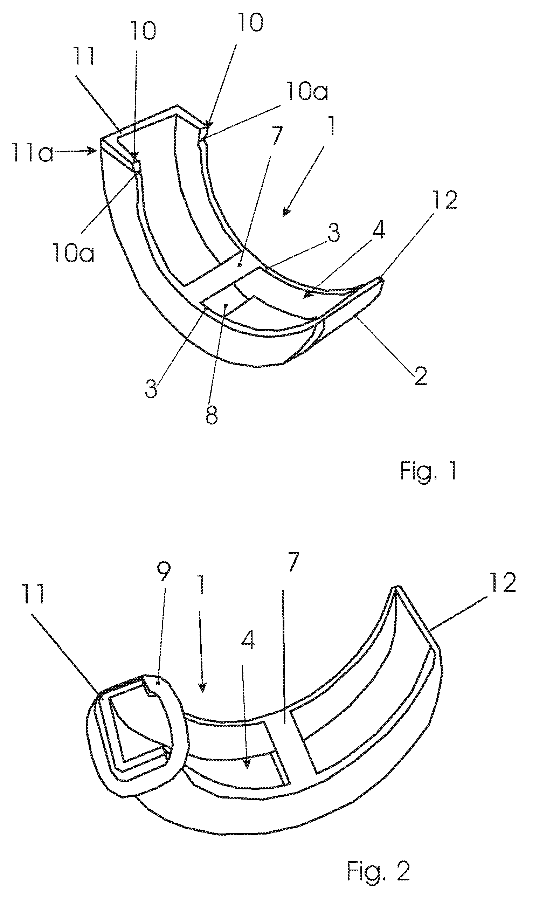

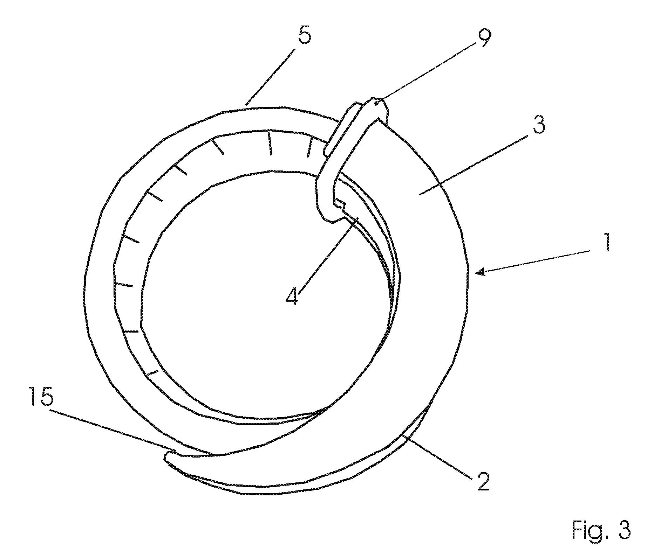

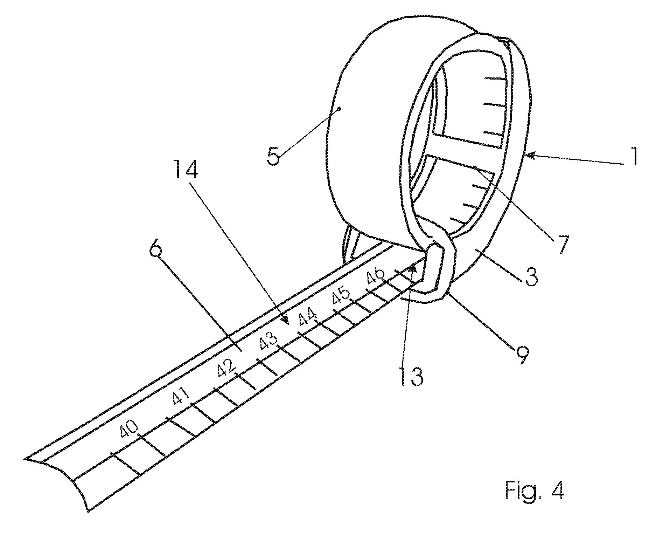

Gemäß Figur 1 sind die Führungsmittel oder der Führungsrahmen für das Rollbandmaß mit einem schalenartigen Rahmenformteil 1 realisiert, welches zweckmäßig und kostengünstig über Kunststoff-Spritzguss herstellbar ist. Das Rahmenformteil 1 besitzt eine gekrümmte Bodenwandung 2, an deren Rändern einstückig parallel gekrümmte Seitenwandungen 3 einander gegenüberliegend angeformt sind. Die Bodenwandung 2 und die Seitenwandungen 3 bilden schalenartig einen Aufnahmeraum 4, der in der radialen Innenrichtung (zu einer gedachten Wickelachse hin) offen ist. Der Krümmungsradius ist so bemessen, dass sich ein Messbandwickel 5 (vgl. Figur 3) darin aufnehmen und ein davon abgerolltes Messband 6 (vgl. Figur 4) ausrollen lässt. Zur Führung der letzteren ist an den freien Schmalseiten bzw. Randkanten der Seitenwandungen 3 ein Führungssteg 7 einstückig integriert bzw. angeformt. Dieser bildet eine brückenartige Verbindung zwischen den Seitenwandungen 3 und überdeckt dabei den Aufnahmeraum 4. Vor allem aus produktionstechnischen Gründen ist in der Bodenwandung 2 dem Führungssteg 7 unmittelbar gegenüberliegend eine Ausnehmung 8 ausgebildet, wodurch in der Bodenwandung 2 ein freier Durchbruch gebildet ist. Dieser lässt sich grundsätzlich auch zur Durchführung des Messbandes 6 verwenden.

Um den Arretier-O-Ring 9 (vgl. z. B. Figur 2, 3 und 4) in seiner Lage gegenüber dem Rahmenformteil 1 in dessen Endbereich zuverlässig fixieren zu können, sind dort gemäß Fig.1 Anschlag- und Haltemittel ausgebildet. Im dargestellten Ausführungsbeispiel sind diese zum einen mittels zweier stufenartiger Aussparungen 10 realisiert, die jeweils in einem End-Eckbereich des freien Randes der jeweiligen Seitenwandung 3 ausgenommen bzw. ausgespart sind. Die Stufen-Aussparungen 10 bilden jeweilige Widerlage-Schultern 10a, welche einer Verschiebung des Arretier-O-Rings 9 in Richtung zum Aufnahmeraum 4 bzw. zum Führungssteg 7 des Rahmenformteils 1 entgegenstehen bzw. diese Verschiebung verhindern. Zum anderen umfassen die Anschlag- und Haltemittel eine vorspringende Anschlagerweiterung 11 mit zwei parallelen, jeweils von der Seitenwandungs-Breitseite vorspringenden Schenkeln und einem zu diesem rechtwinkligen Mittelteil, welcher von der Außenseite der Bodenwandung 2 an deren Endkante vorspringt bzw. absteht und die beiden Schenkel verbindet. Durch die Überstände der Parallel-Schenkel und des Mittelteils der Anschlagerweiterung 11 von den jeweiligen Wandungen ergibt sich eine rechtwinklig und U-artig umlaufende Anschlagschulter 11a, welche einem Lösen des Arretierrings vom Endbereich des Rahmenformteils 1 durch Kräfte entgegensteht, welche beim Ausziehen des Messbandes 6 entstehen können. Das entgegengesetzte Ende 12 des Rahmenformteils 1 (ohne die Stufen-Aussparung 10 und die Anschlagerweiterung 11) ist nach Art einer Messerkante verjüngt. Dieses Messerkanten-Ende 12 lässt sich nützlich dazu einsetzen, das auf dem Messbandwickel 5 außen liegende Messband-Ende 15 komfortabel abzuheben und abzulösen.

Gemäß Figur 2 ist in die beiden Stufen-Aussparungen 10 der Arretier-O-Ring 9 so eingelegt, dass er von der Anschlagschulter 11a der Anschlagerweiterung 11 hintergriffen und gegen die Ausrollrichtung gehalten wird. Gleichzeitig liegt der Arretier-O-Ring 9 an den (in Figur 2 verdeckten) Widerlage-Schultern 10a der jeweiligen Stufen-Aussparungen 10 an und ist dabei gegen Verschiebung beim Einrollen des Messbandes gesichert.

Gemäß Figur 3 erfasst das Rahmenformteil 1 in seinem Aufnahmeraum 4 den Messbandwickel 5 zwischen den Rahmen-Seitenwandungen 3. Dabei kann der Außenumfang des Messbandwickels 5 auf der Innenseite der Bodenwandung 2 hin- und hergleiten.

Wie aus Figur 4 ersichtlich, überdeckt der Führungssteg 7 den Messbandwickel 5 an seinem Innenumfang und bildet dabei für den Messbandwickel 5 eine Gleitführung. Das halbkreis- oder sonst teilkreisförmige Profil des Rahmenformteils 1 ist an die Außenkrümmung des Messbandwickels 5 angepasst. Der Innenumfang des Messbandwickels 5 steht im Ausgangs-Endbereich des Rahmenformteils 1 nur bei entsprechender Kippstellung (siehe unten) in Reibkontakt bzw. in Reibschluss mit dem Arretier-O-Ring 9, welcher das Rahmenformteil 1 allseits umfasst und mit dessen Seiten- und Bodenwandungen 2, 3 im Endbereich einen Enddurchgang 13 bildet. Durch diesen lässt sich der lineare Abschnitt des Messbandes 6 auf den Messbandwickel 5 auf- und abrollen.

Aus Figur 4 ist ferner erkennbar, dass der linear ausgerollte Abschnitt des Messbandes 6 eine in Querrichtung konvex gewölbte Oberseite 14 besitzt, welche dem Außenumfang des Messbandwickels 5 zugewandt ist. Die konvex gewölbte Längsseite 14 geht auf eine in das Material, beispielsweise Stahlblech des Messbandes 6, eingeprägte Querbiegespannung zurück, die beim Aufrollen auf den Messbandwickel 5 induziert wird, weil dabei unter Beseitigung der Querwölbung 14 das Messband 6 eben abgeflacht wird. Da gemäß einer bevorzugten Ausführungsform ferner noch eine Einrollspannung in das Messband bzw. dessen Blechmaterial eingeprägt sein kann, ergibt sich gemäß Figur 3 ein stabiler Zusammenhalt des vollständig aufgerollten Messbandes 6 als Messbandwickel 5, wenn das Messbandende 15 unmittelbar auf dem Außenumfang des Messbandwickels 5 aufliegt (wie in Figur 3 gezeigt). Dabei ist beim Messband 6 die konvexe Querwölbung 14 vollständig beseitigt. Mit dem Ablösen des Messbandendes 15 vom Messbandwickel 5 springt oder schnappt der abgelöste, lineare Messbandabschnitt in die Form mit der konvex gewölbten Außenseite 14 zurück. Die an der Abhebestelle noch ausreichend vorhandene Querspannung, die vorteilhaft größer dimensioniert ist als die Einrollspannung, sorgt für das weitere Abrollen des Messbandes 6 vom Messbandwickel 5, so dass sich das Messband selbsttätig entrollen und in einer geraden Ebene erstrecken kann. Bei einer überwiegenden Einrollspannung würde sich das Messband 5 permanent selbständig einrollen.

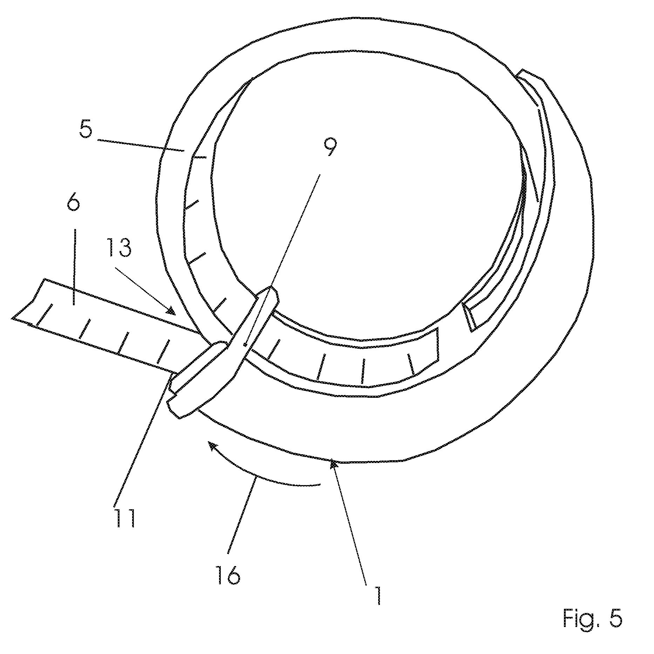

Gemäß Figur 5 lässt sich das selbsttätige Ausrollen aufgrund der Querbiegespannung mit Hilfe des Arretier-O-Ringes 9 im Zusammenwirken mit dem bereits ausgerollten Abschnitt des Messbandes 6 als Hebelarm stoppen bzw. kontrollieren. Dazu wird der Messbandwickel 5 mit seinem Innenumfang zwischen den Seitenwänden 2 translatorisch gegen den Arretierring 9 verschoben. Die Verschiebung wird mit Hilfe einer beispielsweise manuell erteilten Kippbewegung 16 des Rahmenformteils 1 mit Enddurchgang 13 nach oben etwa um die Mittelachse des Messbandwickels 5 herbeigeführt. Dabei schlägt der ausgerollte Abschnitt des Messbandes 6 mit seiner konkaven (Unter-) Seite auf den Innenrand der Anschlagerweiterung 11 auf. Die Berührungsstelle zwischen der konkaven Messband-Unterseite und dem Innenrand der Anschlagerweiterung 11 bildet gleichsam ein Hebelgelenk, über welches der Messbandwickel 5 gegen den Arretierring 9 gehoben oder verschoben und an dessen Innenumfang angedrückt wird. Dabei kommt es zu einem Haft-Reibschluss zwischen dem Messbandwickel 5 und dem Arretierring 9, was eine weitere Drehbewegung und ein weiteres selbsttätiges Ausrollen (ohne zusätzliche Kräfte) verhindert.

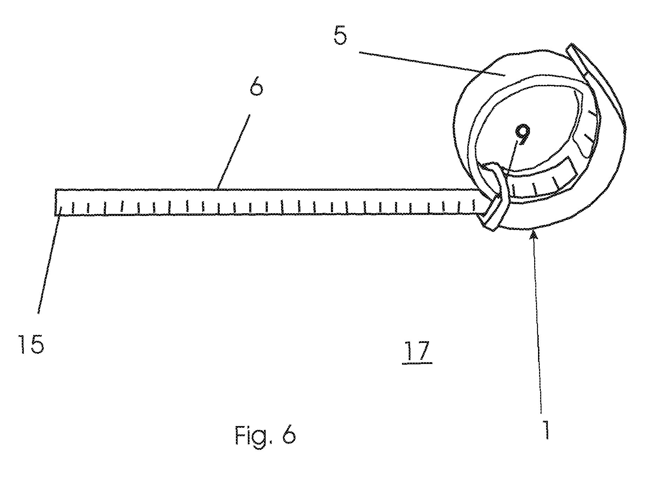

Gemäß Figur 6 ist eine besonders einfache Handhabbarkeit des erfindungsgemäßen Rollbandmaßes wie folgt gegeben: Das Messbandende 15 wird manuell auf eine Unterlage (z. B. Tischkante oder sonstiges Messobjekt) gedrückt. Das Messband 6 kann dann mit einer bestimmten Länge eben ausgerollt werden. Ein weiteres selbsttätiges Ausrollen lässt sich einfach dadurch verhindern, dass das Rahmenformteil 1 mit dem Arretierring 9 auf die Oberfläche der Unterlage abgesetzt wird. Der Arretierring 9 kommt dann in reibschlüssigem Kontakt mit der Unterlage, beispielsweise einer Tischoberfläche 17, so dass das Rollbandmaß mit seinem Rahmenformteil 1 an dieser Stelle fixiert liegen bleibt. Lediglich das Messbandende 15 muss gegen die Tischoberfläche 17 gedrückt gehalten werden.

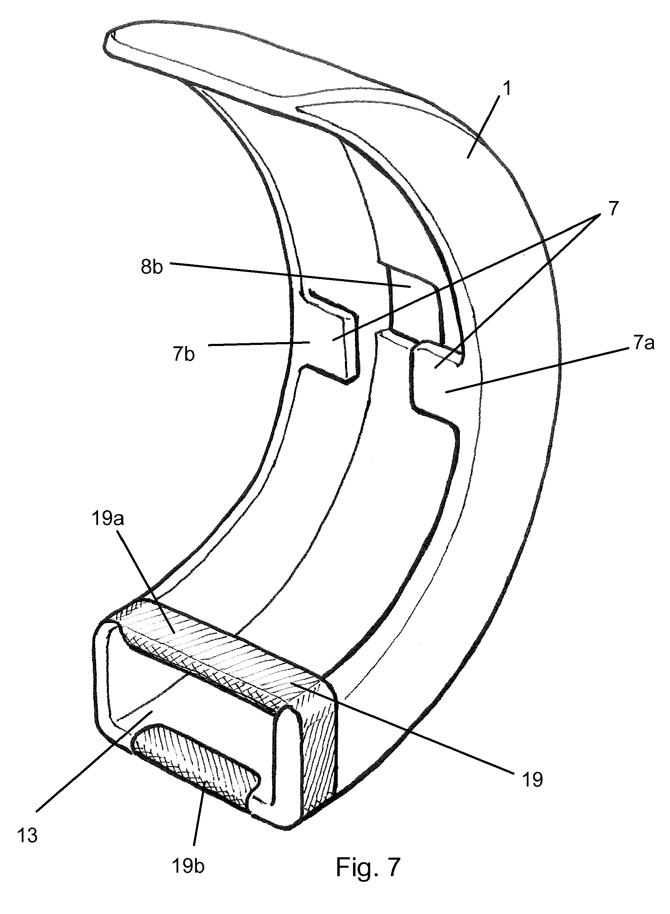

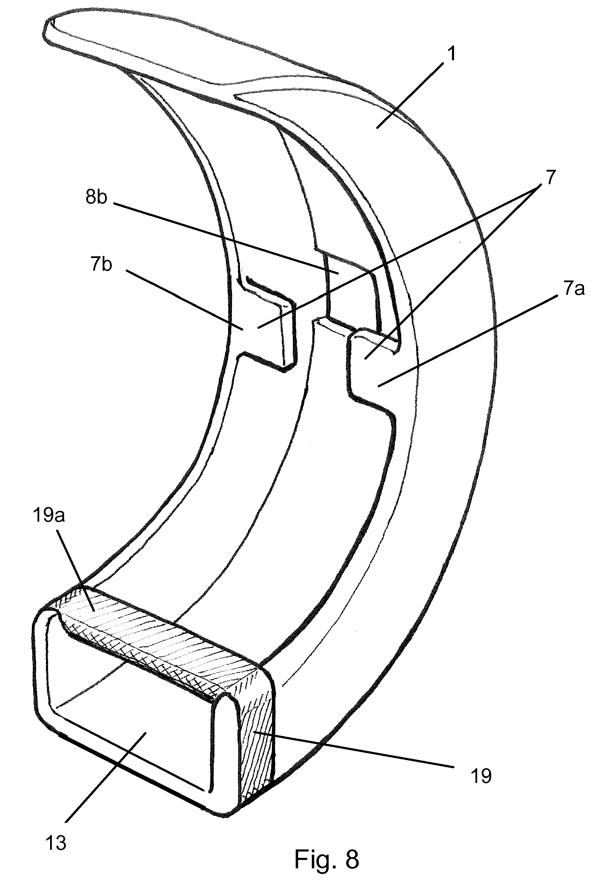

Fig. 7 und Fig. 8 zeigen ein Rahmenformteil 1, der im wesentlichen analog zu dem in den Fig. 1-6 beschriebenen aufgebaut ist. Abweichend von der in den Fig. 1-6 dargestellten Ausführungsform weist das Rahmenformteil 1 gemäß Fig. 7 und 8 einen Führungssteg 7 auf, der nicht durchgehend ausgeführt ist, sondern aus zwei einzelnen, in den Rahmenöffnungsbereich auskragenden Stegteilen 7a, 7b besteht. Entsprechend weist das Rahmenformteil 1 komplementäre Ausnehmungen 8a (nicht gezeichnet), 8b auf der Außenseite auf. Das Arretiermittel 19 ist bei der Ausführungsform gemäß der Figuren 7, 8 integriert mit dem Rahmenformteil 1 ausgeführt, insbesondere in Zweikomponenten-Spritzgusstechnik. Bei der Ausführungsform gemäß Fig. 7 weist das Arretiermittel 19 einen Steg 19a auf, der die Öffnung des Rahmenformteils 1 im Bereich des Enddurchgangs 13 stegartig überspannt, und einen unteren Teil 19b, der an der Unterseite des Rahmenformteils 1 anliegt und so als Rutschbremse dienen kann. Die Ausführungsform nach Fig. 8 weist lediglich einen oberen Steg 19a auf, eine Rutschbremse ist hier nicht vorgesehen. Eine solche Ausführung bietet sich für Anwendungen an, bei denen Verschmutzungen auf der Unterseite kritisch sind und für die deshalb eine möglichst glatte, schmutzabweisende Unterseite vorteilhaft ist.

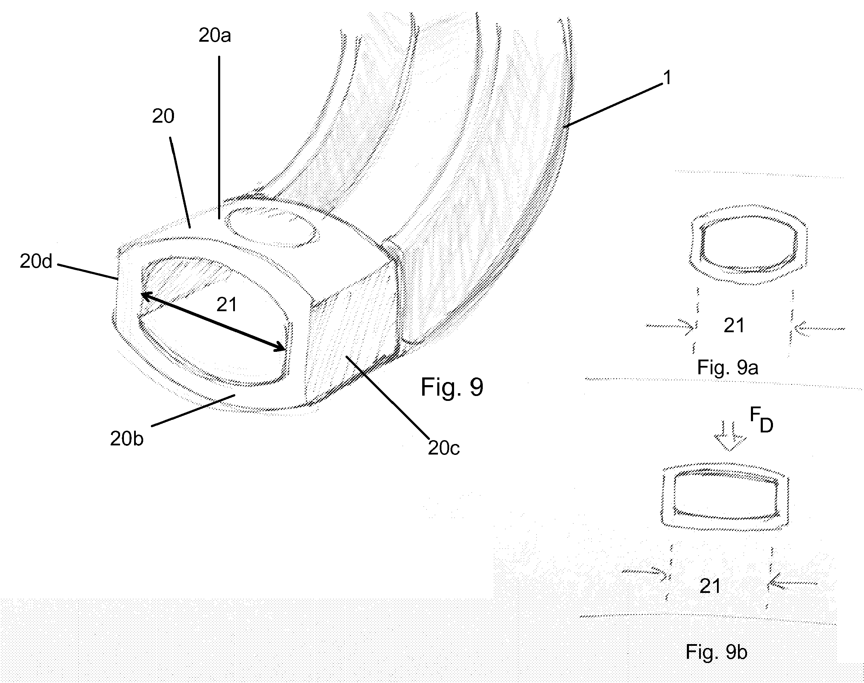

Fig. 9 zeigt eine vorteilhafte Ausführungsform für ein Arretiermittel 20, das wahlweise als separates Bauteil oder integriert mit dem Rahmenformteil 1 ausgebildet sein kann. Das Arretiermittel 20 weist eine gebogene Ober- und Unterseite 20a, 20b auf und ist so gefertigt, dass der Abstand 21 zwischen den Seitenteilen 20c, 20d geringer als die Messbandbreite ist. Dadurch wird das Messband im Enddurchgangsbereich zwischen den Seitenteilen 20c, 20d eingeklemmt und festgehalten. Wenn das Messband gelöst werden soll, kann durch einen Druck auf die gebogene Ober- und Unterseite 20a, 20b eine Verbreiterung des Abstands 21 zwischen den Seitenteilen 20c, 20d bewirkt werden, so dass das Messband nicht mehr im Reibschluss zwischen den Seitenteilen 20c, 20d gehalten ist und Ausrollen kann. In Fig. 9a ist das Arretiermittel 20 noch einmal in einer Vorderansicht gezeigt, der Abstand 21 ist geringer als die Messbandbreite. In Fig. 9b ist das Arretiermittel 20 mit einer auf die Oberseite aufgebrachten Druckkraft F_{D} dargestellt, der Abstand 21 hat sich erweitert und das Messband kann ohne Klemmwirkung durch das Arretiermittel 20 hindurchgeführt werden.

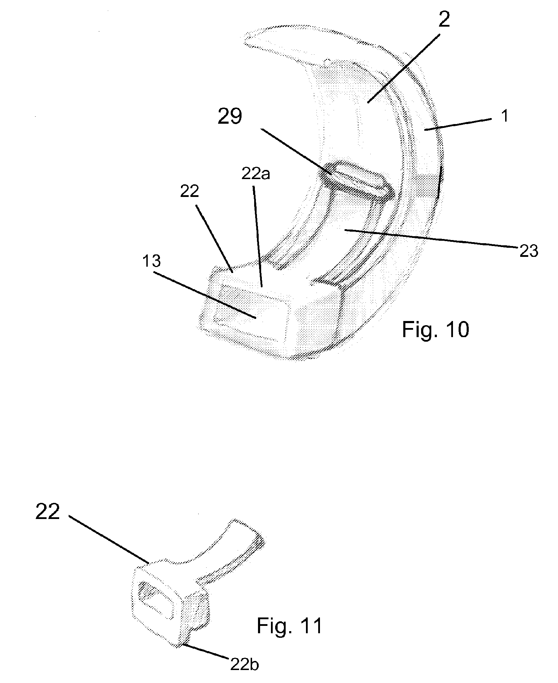

Fig. 10 zeigt eine weitere Ausführungsform eines erfindungsgemäßen Arretiermittels 22. Das Arretiermittel 22 weist einen weiteren Steg 23 auf, der sich von der dem Enddurchgang 13 gegenüberliegenden Seite des Stegs 22a vom Enddurchgang weg auskragt und dabei in einem Abstand zur Bodenwand 2 verläuft. Dementsprechend weist der Steg 23 eine Krümmung auf, die an die Krümmung des Rahmenformteils 1 angepasst ist. An seinem freien Ende weist der Steg 23 ein Reibschlussmittel 24 auf, im vorliegenden Fall einen Arretier-Ring aus Gummi oder einem anderen reibschlussfähigen Material. Es ist aber ebenso möglich, das gesamte Arretiermittel aus einem reibschlussfähigen Material herzustellen oder alternativ ein Reibschlussmittel 24 integriert mit dem Arretiermittel 22 beispielsweise im Zweikomponenten-Spritzgussverfahren herzustellen.

Fig. 11 zeigt ein Arretiermittel 22, das ähnlich wie das Arretiermittel 22 gemäß Fig. 10 aufgebaut ist, aber vollständig aus einem reibschlussfähigen Material wie beispielsweise Gummi besteht. Im Unterschied zur Ausführungsform aus Fig. 10 weist das Arretiermittel 22 gemäß Fig. 11 eine untere Lippe 22b auf, die über die Unterseite des Rahmenformteils 1 hinaussteht. Da die Lippe 22b ebenfalls aus einem reibschlussfähigen Material besteht, ist ein Rollmaßband mit einem Arretiermittel gemäß der Fig. 11 beim Aufsetzen auf eine Oberfläche vor Verrutschen geschützt.

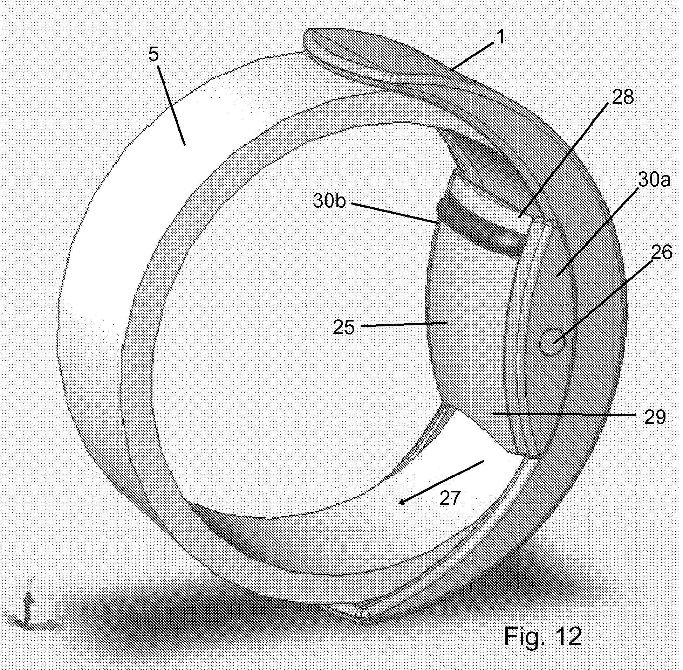

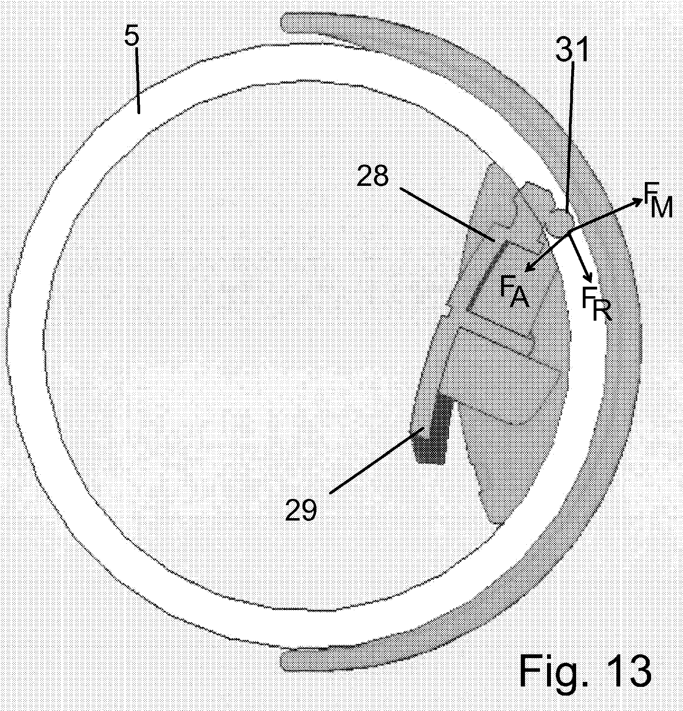

Fig. 12 zeigt eine weitere Ausführungsform eines Arretiermittels 25, die über die Achse 26 drehbar gelagert ist. Das Arretiermittel 25 weist eine Wippenform auf, mit einem Reibschlussbereich 28 und einem Betätigungsbereich 29, die auf gegenüberliegenden Seiten der Drehachse 26 angeordnet sind. Der Reibschlussbereich ist dabei entgegen der Drehrichtung 27 des Messbandwickels 5 gerichtet, so dass bei Drehung und Reibung des Messbandes die Kraft F_{R} zwischen Reibschlussbereich und Messband erzeugt wird (s. Fig. 13). Da das Arretiermittel 25 an der Drehachse 26 drehbar gelagert ist, kann eine Abstützung nur in Richtung vom Reibungspunkt 31 zwischen Reibschlussbereich und Messband zur Drehachse erfolgen, es entsteht eine Abstützungskraft F_{A}. Da die Kraft F_{R} aber im Winkel zur Kraft F_{A} steht, ist zum Ausgleich des Kräftepaares eine weitere Kraft F_{M} notwendig, die im Reibschlusspunkt 31 senkrecht zum Messbandwickel 5 steht und den Reibschlussbereich 28 fest auf den Messbandwickel 5 presst. Damit ist eine sichere Arretierung gewährleistet, bis ein Benutzer auf den Betätigungsbereich 29 des Arretiermittels 25 drückt und derart die Kraft F_{M} überwindet, so dass das Messband Ausrollen kann. Bei entsprechender Dimensionierung ist es zusätzlich möglich, den Reibschlussbereich derart auszubilden, dass er zwischen den Seitenwänden 30a, 30b in der Arretierstellung eingeklemmt wird, um so die Arretierung zusätzlich zu sichern. Alternativ ist es möglich, das Arretiermittel 25 mit einer Torsionsfeder (nicht gezeichnet) um die Drehachse 26 auszustatten. Durch eine derartige Torsionsfeder wird das Arretiermittel fest gegen das Messband gepresst und sicher arretiert, mittels Druck auf den Betätigungsbereich 29 wird die Fedekraft überwunden und das Messband freigegeben.

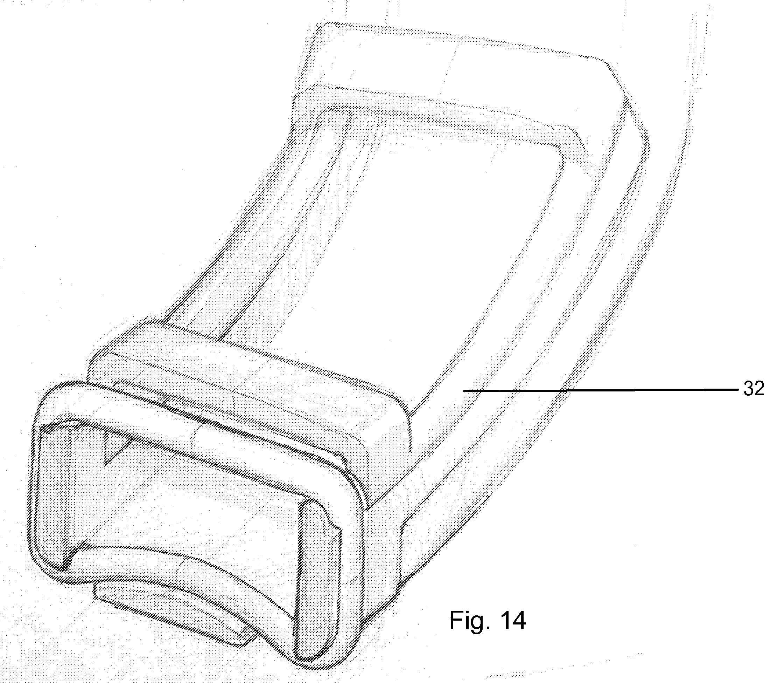

Fig. 14 zeigt ein separat gefertigtes Zusatzteil 32, das auf ein Rahmenformteil 1 gemäß der Erfindung aufgebracht werden kann und zur Bandführung und Versteifung dient.

### Bezugszeichenliste

- 1: Rahmenformteil
- 2: Bodenwandung
- 3: Seitenwandungen
- 4: Aufnahmeraum
- 5: Messbandwickel
- 6: Messband
- 7: Führungssteg
- 8: Ausnehmung, Durchbruch
- 9: Arretier-O-Ring
- 10: Stufen-Aussparung
- 10a: Widerlage-Schultern
- 11: Anschlagerweiterung
- 11a: Anschlag-Schulter
- 12: (entgegengesetztes) Messerkanten-Ende
- 13: Enddurchgang
- 14: konvex gewölbte Außenseite
- 15: Messbandende
- 16: Kippbewegung
- 17: Tischoberfläche
- 19: Arretiermittel
- 19a: Steg Arretiermittel
- 19b: Unterseite Arretiermittel
- 20: Arretiermittel
- 20a: Oberseite Arretiermittel
- 20b: Unterseite Arretiermittel
- 20c,d: Seitenteile Arretiermittel
- 21: Abstand Seitenteile Arretiermittel
- 22: Arretiermittel
- 22a: Steg
- 22b: Lippe
- 23: auskragender Steg
- 24: Reibschlussmittel
- 25: Arretiermittel
- 26: Drehachse
- 27: Ausroll-Drehrichtung Messbandwickel
- 28: Reibschlussbereich
- 29: Betätigungsbereich
- 30a,b: Seitenwände
- 31: Reibschlusspunkt

## Patentansprüche

1. Rollbandmaß, mit einem oder mehreren Führungsmitteln, insbesondere Führungsrahmen, die einen Enddurchgang (13) aufweisen, innerhalb welchem ein Messband (6) ein- und ausrollbar ist, und mit wenigstens einem mit Reibschluss arbeitenden Messband-Arretiermittel (9,19,20,22), mit dem das Messband (6) in reibschlüssigen Kontakt bringbar ist, **dadurch gekennzeichnet, dass** das Arretiermittel (9,19,20,22) als Schnur-, Band- oder sonstiges Formteil (9,20,22) ausgebildet und an den Führungsmitteln unverstellbar fixiert ist.

2. Rollbandmaß, mit einem oder mehreren Führungsmitteln, insbesondere Führungsrahmen, die einen Enddurchgang (13) aufweisen, innerhalb welchem ein Messband (6) ein- und ausrollbar ist, und mit wenigstens einem mit Reibschluss arbeitenden Messband-Arretiermittel (9,19,20,22), mit dem das Messband (6) in reibschlüssigen Kontakt bringbar ist, **dadurch gekennzeichnet, dass** Arretiermittel (19,20,22) integral mit den Führungsmitteln gebildet ist, insbesondere mittels Zweikomponenten-Spritzguss.

3. Rollbandmaß, mit einem oder mehreren Führungsmitteln, insbesondere Führungsrahmen, die einen Enddurchgang (13) aufweisen, innerhalb welchem ein Messband (6) ein- und ausrollbar ist, und das Messband durch eine darauf wirkende Kraft zum selbsttätigen Ein- oder Ausrollen ausgebildet ist, und mit wenigstens einem mit Reibschluss arbeitenden Messband-Arretiermittel (25), mit dem das Messband (6) in reibschlüssigen Kontakt bringbar ist, **dadurch gekennzeichnet, dass** das oder die Arretiermittel (25) zur automatischen Arretierung des Messbandes beim selbsttätigen Ein- oder Ausrollen ausgebildet ist bzw. sind.

4. Rollbandmaß nach Anspruch 1 oder 2, **dadurch gekennzeichnet, dass** das oder die Arretiermittel (9,19,20,22) mit dem Enddurchgang (13) derart in Verbindung gesetzt ist und/oder den Enddurchgang (13) zumindest teilweise derart begrenzt, insbesondere als die Führungsmittel und/oder den Enddurchgang (13) umgebender oder umfassender Arretierring bzw. Arretier-Rahmen, dass das Messband (6) mit dem Arretiermittel (9,19,20,22) in Berührung setzbar ist.

5. Rollbandmaß nach einem der vorangehenden Ansprüche, **dadurch gekennzeichnet, dass** das Messband (6) derart bombiert oder sonst strukturiert ist, dass es beim Ausrollen eine Wölbung quer zu seiner Längsrichtung und eine entsprechend konvex ausgebauchte Längsseite (14) bildet, die gegen einen noch aufgerolltem Abschnitt (5) des Messbandes (6) gerichtet ist.

6. Rollbandmaß nach einem der vorangehenden Ansprüche, **dadurch gekennzeichnet, dass** das Messband (6) mit einer Einrollspannung versehen ist.

7. Rollbandmaß nach Ansprüche 6 und 7, **dadurch gekennzeichnet, dass** das Messband (6) mit einer die Wölbung (14) quer zur Längsrichtung verursachenden Querbiegespannung strukturiert oder versehen ist, die größer als die Einrollspannung ausgelegt ist.

8. Rollbandmaß nach einem der Ansprüche 3, 5, 6 oder 7, **dadurch gekennzeichnet, dass** das oder die Arretiermittel (25) um eine Achse (26) verschwenkbar an dem oder den Führungsmitteln befestigt ist bzw. sind, und das oder die Arretiermittel (25) einen Reibschlussbereich (28) und einen Betätigungsbereich (29) aufweisen, wobei der Reibschlussbereich (28) und der Betätigungsbereich (29) bezüglich der Achse gegenüberliegend angeordnet sind.

9. Rollbandmaß nach Anspruch 8, **dadurch gekennzeichnet, dass** der Reibschlussbereich (28) durch ein separates, als Schnur-, Band- oder sonstiges Formteil ausgebildetes Reibschlussmittel gebildet wird oder integral mit dem Arretiermittel (25) ausgebildet ist, insbesondere im Zweikomponenten-Spritzgussverfahren.

10. Rollbandmaß nach einem der vorangehenden Ansprüche, wobei das Messband (6) beim Einrollen einen Wickel (5) bildet, **dadurch gekennzeichnet, dass** der Wickel (5) von den Führungsmitteln oder dem Führungsrahmen derart mit translatorischem Verstellspiel erfasst ist, dass je nach Verstellung das Messband (6) in oder außer Kontakt mit dem Arretiermittel (9,19,20,22,25) bringbar ist.

11. Rollbandmaß nach Anspruch 9, **dadurch gekennzeichnet, dass** der ausgerollte Abschnitt des Messbandes (6) bei Anschlag an und/oder Auflage auf den Enddurchgang (13) als Hebelarm oder sonstiges Verstellelement wirkt, das den verbliebenen Messbandwickel (5) im Rahmen des translatorischem Verstellspiels gegen das Arretiermittel (9,19,20,22,25) drückt und/oder verstellt.

12. Rollbandmaß nach einem der vorangehenden Ansprüche, **dadurch gekennzeichnet, dass** das oder die Arretiermittel (9,19,20,22,25) wenigstens teilweise aus einem elastischen Material, insbesondere Gummi oder thermoplastischem Elastomer, hergestellt ist.

13. Rollbandmaß nach einem der vorangehenden Ansprüche, **gekennzeichnet durch** einen Bereich (19b, 22b) aus Gummi oder thermoplastischem Elastomer, der auf der Außenseite der Führungsmittel bzw. des Führungsrahmens nahe des Enddurchgangs angeordnet ist, insbesondere als Teil des oder der Arretiermittel.

14. Rollbandmaß nach einem der vorangehenden Ansprüche, **dadurch gekennzeichnet, dass** das oder die Arretiermittel (9,19,20,22,25) dazu ausgebildet sind, mittels Druck auf einen Teil oder eine Seite des Arretiermittels die Arretierung des Messbandes zu lösen und bei Entfernen des Drucks das Messband wieder zu arretieren.

15. Führungsmittel oder Führungsrahmen für das Rollbandmaß nach einem der vorangehenden Ansprüche, aus einem Schalen- oder Rahmenformteil (1), wobei das einem Schalen- oder Rahmenformteil (1) einen Krümmungsradius aufweist, der einem im Schalen- oder Rahmenformteil (1) aufrollbaren Messband-Wickel (5) entspricht, und ein Messband-Durchgangsbereich von gegenüber liegenden Seitenwandungen (3) und einer Bodenwandung (2) des Schalen- oder Rahmenformteils (1) begrenzt ist **dadurch gekennzeichnet, dass** das Schalen- oder Rahmenformteil (1) länglich ausgebildet ist und die Außenseite des Schalen- oder Rahmenformteil (1) im wesentlichen einen Teilkreis beschreibt, wobei eine Schalen- oder Rahmenöffnung nach radial innen gerichtet ist, und die Schalen-oder Rahmenformteil-Längsrichtung einer Messband-Durchgangsrichtung entspricht.

16. Führungsmittel oder Führungsrahmen nach Anspruch 15, **dadurch gekennzeichnet, dass** die Schalen- oder Rahmenöffnung von einem Führungsteg (7), insbesondere einem einstückig mit dem Schalen- oder Rahmenformteil (1) und/oder mit Kunststoff ausgeführt, quer zur Längsrichtung überdeckt ist.

17. Führungsmittel oder Führungsrahmen nach Anspruch 16, **dadurch gekennzeichnet, dass** die Schalenöffnung von einem oder mehreren Arretiermitteln (9,19,20,22,25) quer zur Längsrichtung eines Messbandwickel-Aufnahmeraums (4) im Schalen- oder Rahmenformteil (1) überdeckt ist.

18. Führungsmittel oder Führungsrahmen nach Anspruch 17, **dadurch gekennzeichnet, dass** das oder die Arretiermittel (9,19,20,22,25) ganz oder teilweise aus einem elastischen Material, insbesondere Gummi oder thermoplastische Elastomere, hergestellt sind, wobei das oder die Arretiermittel integriert mit dem Führungsmittel oder Führungsrahmen, insbesondere mittels Zweikomponenten-Spritzguß, oder separat bzw. entfernbar ausgebildet sind.

19. Führungsmittel oder Führungsrahmen nach Anspruch 17 oder 18, **dadurch gekennzeichnet, dass** das Arretiermittel (9,19,20,22,25) im Endbereich des Schalen- oder Rahmenformteils (1) mit diesem einen Enddurchgang (13) bildet.

20. Führungsmittel oder Führungsrahmen nach einem der Ansprüche 15 bis 19, **gekennzeichnet durch** an das Arretiermittel (9,19,20,22,25) anpasste Anschlag- und/oder Haltemittel (10,10a,11,11a) im Endbereich des Schalen- oder Rahmenformteils (1).
